# EUROPEAN PATENT APPLICATION

(11) **EP 4 220 755 A1**
(43) Date of publication of application: **02.08.2023**
(21) Application number: 22827043.5
(22) Date of filing: 04.03.2022
(51) Int. Cl.: H01M 4/133, H01M 4/583, H01M 10/054

(54) **NEGATIVE ELECTRODE PLATE FOR SODIUM-ION BATTERY, ELECTROCHEMICAL APPARATUS, AND ELECTRONIC DEVICE**

(30) Priority: 26.06.2021 CN 202110742798
(71) Applicant: Contemporary Amperex Technology Co., Limited, Ningde, Fujian 352100 (CN)
(72) Inventor: ZENG, Yuqun, Ningde, Fujian 352100 (CN)
(74) Representative: Jacob, Reuben Ellis
(86) International application number: PCT/CN2022/079319
(87) International publication number: WO 2022/267538

(57) **Abstract**

The present application provides a negative electrode plate for a sodium-ion battery, an electrochemical apparatus, and an electronic device. The negative electrode plate comprises a negative current collector and a carbon material coating formed on at least a part of the surface of the negative current collector, the thickness of the carbon material coating is less than or equal to 10 µm, and the carbon material coating comprises a carbon material and a polymer adhesive.

## Description

### Cross-Reference to Related Applications

The present application claims priority to Chinese patent application 202110742798.7 entitled "NEGATIVE ELECTRODE PLATE FOR SODIUM-ION BATTERY, ELECTROCHEMICAL APPARATUS AND ELECTRONIC DEVICE" and filed on Jun 26, 2021, the entire content of which is incorporated herein by reference.

### Technical Field

The present application relates to the technical field of energy storage, and in particular to a negative electrode plate for a sodium-ion battery, an electrochemical apparatus and an electronic device.

### Background Art

With the increasingly prominent energy and environmental issues, the new energy industry has received more and more attention. Lithium-ion batteries have been widely applied as an important new energy storage apparatus in recent years due to their characteristics of high energy density, good cycling performance, and the like. However, due to the scarcity of active material resources related to the lithium-ion batteries, the cost of the batteries is always high; and meanwhile serious problems such as depletion of related resources exist, so it is necessary to develop other metal-ion secondary battery systems with low cost.

Sodium-ion batteries have become a hot research direction in recent years due to their advantages of low cost, abundant resources, manufacturing processes similar to the lithium-ion batteries, and the like. However, as limited by the relatively lower gram capacity and voltage platform of the positive and negative electrode materials of the current sodium-ion batteries, there is always a large gap between the energy density of the sodium-ion batteries and that of the lithium-ion batteries, which makes it impossible to realize commercial application. Under the background that the energy density of the positive electrode material has never been broken through, the direct employment of sodium metal (with a theoretical specific capacity of 1,166 mAh/g) as a negative electrode has become an effective method to greatly improve the energy density of the battery. However, due to the poor chemical stability and low melting point (98°C) of the sodium metal in air and the tendency of dendrite formation of the sodium metal during a electrochemical cycle, and the like, it is difficult to realize commercial application of the sodium-ion batteries.

### Summary of the Invention

In view of this, the present application provides a negative electrode sheet of a sodium-ion battery, an electrochemical apparatus and an electronic device, which can effectively inhibit dendrite formation of sodium metal during a electrochemical cycle and improve the cycling performance of a battery.

In a first aspect, the present application provides a negative electrode sheet of a sodium-ion battery, comprising a negative electrode current collector and a carbon material coating formed on at least part of a surface of the negative electrode current collector, wherein the thickness of the carbon material coating is less than or equal to 10 µm, and the carbon material coating comprises a carbon material and a polymer binder.

In some alternative embodiments, the negative electrode sheet satisfies at least one of the following conditions:
(1) the carbon material comprises at least one of mesocarbon microbead, graphite, natural graphite, expanded graphite, artificial graphite, vitreous carbon, a carbon-carbon composite material, carbon fiber, hard carbon, porous carbon, highly oriented graphite, three-dimensional graphite, carbon black, carbon nanotube and graphene;
(2) the mass ratio of the carbon material in the carbon material coating is 90%-99%;
(3) the mass ratio of the carbon material in the carbon material coating is 94%-97%;
(4) the thickness of the carbon material coating is 0.3 µm to 10 µm; and
(5) the thickness of the carbon material coating is 1 µm to 7 µm.

In some alternative embodiments, the negative electrode sheet satisfies at least one of the following conditions:
(6) the negative electrode current collector comprises at least one of metal foil, a metal foam current collector, a metal mesh current collector, a carbon felt current collector, a carbon cloth current collector, a carbon paper current collector and a composite current collector; and
(7) the negative electrode current collector has a porous structure, and the negative electrode current collector comprises at least one of porous aluminum foil, porous copper foil and porous stainless steel foil.

In some alternative embodiments, the negative electrode sheet further comprises a sodium metal layer formed on at least part of the surface of the carbon material coating away from the negative electrode current collector.

In some alternative embodiments, the mass content of the sodium metal layer in the negative electrode sheet is 0.1% to 1%.

In some alternative embodiments, the negative electrode sheet satisfies at least one of the following conditions:
(8) the carbon material comprises an oxygen-containing group selected from at least one of a carboxyl group, a hydroxyl group and an ether group; and
(9) the carbon material comprises an oxygen-containing groups, and the mass content of oxygen atoms in the carbon material is ≥ 0.1%.

In some alternative embodiments, the polymer binder comprises at least one of sodium cellulose, sodium carboxymethyl cellulose, hydroxypropyl cellulose, sodium hydroxymethylcellulose, potassium hydroxymethylcellulose, diacetyl cellulose, polyacrylic acid, sodium alginate, styrene butadiene rubber, butadiene acrylate rubber, polypyrrole, polyaniline, epoxy resin and guar gum.

In a second aspect, the present application provides an electrochemical apparatus comprising a positive electrode sheet, a negative electrode sheet and an electrolyte solution, wherein the negative electrode sheet is the negative electrode sheet as described in the first aspect described above.

In some alternative embodiments, the positive electrode sheet comprises a positive electrode current collector and a positive electrode active material layer formed on at least part of a surface of the positive electrode current collector, wherein the positive electrode active material layer comprises a positive electrode active material comprising at least one of a sodium transition metal oxide, a polyanionic compound and a Prussian blue compound.

In a third aspect, the present application provides an electronic device comprising the electrochemical apparatus according to the second aspect as described above.

As compared with the prior art, the present application at least has the following beneficial effects:

The present application provides the negative electrode sheet of the sodium-ion battery, the electrochemical apparatus and the electronic device, wherein the surface of the negative electrode current collector of the negative electrode sheet has no negative electrode active material. When charging for the first time, metal sodium is deposited on the surface of the negative electrode current collector, so that the formed metal sodium as deposited can be attached to the carbon material coating on the surface of the negative electrode current collector. The carbon material coating can effectively reduce the overpotential of sodium metal deposition, inhibit the formation of sodium dendrites, and help to improve the cycling performance of the battery. During the discharge process, the metal sodium can be converted into sodium ions and returned to the positive electrode to realize cycling charge and discharge. Also, the carbon material coating can improve the kinetic performance of sodium metal nucleation in the sodium-ion battery. Since the sodium metal is generated in subsequent cycling processes, the sodium-ion battery has no voltage before the first charge. Therefore, the sodium-ion battery can be stored for a long time without self-discharge. No current will be generated even if the battery is short-circuited, which has extremely high security.

### Description of Drawings

In order to explain the technical solution of the embodiments of the present application more clearly, the drawings that would be used in the embodiments of the present application will be briefly introduced hereafter. Obviously, the drawings described hereafter are only some embodiments of the present application, and for those of ordinary skills in the art, other drawings can be obtained according to these drawings without paying creative labor.

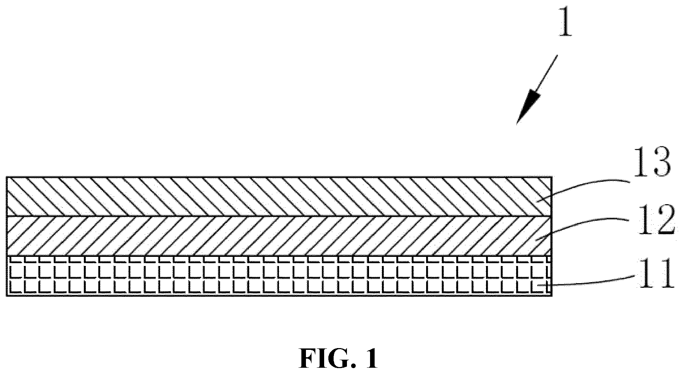

Fig. 1 is a schematic structural view of a negative electrode sheet of a sodium-ion battery provided by some embodiments of the present application.

### Detailed Description

The following descriptions are preferred implementations of the embodiments of the present invention. It should be noted that for those of ordinary skills in the art, several improvements and modifications may further be made without departing from the principle of the embodiments of the present invention. These improvements and modifications should also be deemed as falling within the protection scope of the embodiments of the present invention.

For the sake of brevity, only some numerical ranges are explicitly disclosed herein. However, any lower limit can be combined with any upper limit to form a range not explicitly recited; and any lower limit can be combined with another lower limit to form a range not explicitly recited, and likewise, any upper limit can be combined with any another upper limit to form a range not explicitly recited. Furthermore, every point or single numerical value between the endpoints of a range is included within the range, even if not expressly recited. Thus, each point or single numerical value may serve as its own lower or upper limit to form an unspecified range in combination with any other point or single numerical value or with other lower or upper limits.

In the description herein, it should be noted that, "above" and "below" are inclusive of the numerical numeral itself, and the meaning of "more" in "one or more" is more than two, unless otherwise specified.

In the description herein, unless otherwise stated, the term "or" is inclusive. By way of example, the phrase "A or B" means "A, B, or both A and B". More specifically, the condition "A or B" is satisfied by any one of the following conditions: A is true (or present) and B is false (or absent); A is false (or absent) and B is true (or present); or both A and B are true (or present).

It should be understood that relational terms such as "first", "second", are only used to distinguish one entity or operation from another entity or operation, and do not necessarily require or imply the presence of any actual relationship or order between these entities or operations.

The above summary of the invention of the present application is not intended to describe each disclosed embodiment or every implementation in the present application. The following description illustrates exemplary embodiments more specifically. In various places throughout the present application, guidance is provided through a series of examples, and these examples can be used in various combinations. In each example, the enumeration is performed to give only representative groups and should not be interpreted as exhaustive.

### First aspect

The present application provides a negative electrode sheet of a sodium-ion battery, as shown in Fig. 1, wherein the negative electrode sheet 1 comprises a negative electrode current collector 11 and a carbon material coating 12 formed on at least part of a surface of the negative electrode current collector 11, the thickness of the carbon material coating 12 is less than or equal to 10 µm, and the carbon material coating 12 comprises a carbon material and a polymer binder.

In the aforementioned solution, the thickness of the carbon material coating on the surface of the negative electrode current collector is relatively small and cannot function as a negative electrode active material. The negative electrode sheet of the present application is a negative electrode sheet without the negative electrode active material. When charging for the first time, metal sodium is deposited on the surface of the negative electrode current collector, so that the formed metal sodium as deposited can be attached to the carbon material coating on the surface of the negative electrode current collector. The carbon material coating can effectively reduce the overpotential of sodium metal deposition, inhibit the formation of sodium dendrites, and help to improve the cycling performance of the battery. During the discharge process, the metal sodium can be converted into sodium ions and returned to the positive electrode to realize cycling charge and discharge.

The carbon material coating can improve the kinetic performance of sodium metal nucleation in the sodium-ion battery. Since the sodium metal is generated in subsequent cycling processes, the sodium-ion battery has no voltage before the first charge. Therefore, the sodium-ion battery can be stored for a long time without self-discharge. No current will be generated even if the battery is short-circuited, which has extremely high security. Since the surface of the negative electrode current collector has no anode active material, only the negative electrode current collector is used, so that the battery can obtain a higher energy density than a negative electrode of metal sodium.

As an alternative technical solution of the present application, the negative electrode current collector 11 comprises at least one of metal foil, a metal foam current collector, a metal mesh current collector, a carbon felt current collector, a carbon cloth current collector, a carbon paper current collector and a composite current collector. Optionally, the metal foil may be copper foil, aluminum foil, stainless steel foil, iron foil, zinc foil, titanium foil, etc., the metal foam current collector may be copper foam, aluminum foam, zinc foam, etc., and the metal mesh current collector may be copper mesh, aluminum mesh, etc. The negative electrode current collector 11 may also be a composite current collector formed by compounding the metal foil and the metal foam, or a composite current collector formed by compounding the metal foil and the metal mesh, or a composite current collector formed by compounding the metal foil and a polymer base film, which is not limited here.

Since a sodium ion do not form an alloy with aluminum, based on the consideration of cost reduction and weight reduction, an aluminum-based current collector is preferably employed, comprising any one of aluminum foil, aluminum alloy foil and an aluminum-based composite current collector. The aluminum-based composite current collector comprises a polymer base film, and aluminum foil and/or aluminum alloy foil formed on both sides of the polymer base film. Optionally, the aluminum-based composite current collector is of a "sandwich" structure, in which the polymer base film is located in the middle, with the aluminum foil being provided on both sides thereof, or the aluminum alloy foil being provided on both sides thereof, or with the aluminum foil being provided on one side of the polymer base film and the aluminum alloy foil being provided on the other side of the polymer base film. The polymer base film is any one of polyamide, polyterephthalate, polyimide, polyethylene, polypropylene, polystyrene, polyvinyl chloride, an acrylonitrile-butadiene-styrene copolymer, polybutylene terephthalate, poly-p-phenylene terephthamide, poly(propylene-co-ethylene), polyformaldehyde, epoxy resin, phenolic resin, polytetrafluoroethylene, polyvinylidene fluoride, silicone rubber and polycarbonate. Optionally, the aluminum-based composite current collector selected by the present invention has better extensibility, which is beneficial to maintaining the integrity of the electrode in a sodium deposition/deintercalation process.

Optionally, the thickness of the negative electrode current collector 11 is 3 µm to 15 µm, specifically it can be 3 µm, 4 µm, 5 µm, 6 µm, 8 µm, 10 µm, 12 µm or 15 µm, etc., and can also be other values within the aforementioned range, which is not limited here. The energy density of the battery will decrease if the negative electrode current collector is too thick, and the processing performance of the battery will decrease if the negative electrode current collector is too thin.

As an alternative technical solution of the present application, the negative electrode current collector 11 has a porous structure, and the negative electrode current collector comprises at least one of porous aluminum foil, porous copper foil and porous stainless steel foil. The negative electrode current collector has a porous structure, which can increase the specific surface area of the negative electrode current collector, increase the alleviation of the volume change of the negative electrode sheet and inhibit the formation of dendrites.

As an alternative technical solution of the present application, the thickness of the carbon material coating 12 is 0.3 µm to 10 µm; specifically, it can be 0.3 µm, 0.5 µm, 1.0 µm, 1.4 µm, 1.8 µm, 2.2 µm, 3.5 µm, 4.0 µm , 4.5 µm, 4.9 µm, 5.5 µm, 6.0 µm, 7.0 µm, 8.0 µm, 9.2 µm, or 10 µm, etc., and can also be other values within the aforementioned range, which is not limited here. When the carbon material coating on the surface of the negative electrode current collector 11 is too thick, the energy density of the battery will decrease, and the effect of no negative electrode cannot be achieved; and when the carbon material coating on the surface of the negative electrode current collector 11 is too thin, it will cause too few nucleation sites for the sodium metal, and thus the overpotential of sodium intercalation cannot be effectively improved, resulting in growth of sodium dendrites towards a separator and deteriorating the cycling performance of the battery. Optionally, the thickness of the carbon material coating is 1 µm to 7 µm; and further optionally, the thickness of the carbon material coating is 3 µm to 5 µm.

As an alternative technical solution of the present application, the carbon material coating 12 comprises a carbon material and a polymer binder. The carbon material comprises at least one of mesocarbon microbead, graphite, natural graphite, expanded graphite, artificial graphite, vitreous carbon, a carbon-carbon composite material, carbon fiber, hard carbon, porous carbon, highly oriented graphite, three-dimensional graphite, carbon black, carbon nanotube and graphene. It can be understood that by forming the carbon material coating on the surface of the negative electrode current collector, the conductivity of sodium ion diffusion can be improved, the overpotential of sodium intercalation can be reduced, and the formation and growth of sodium dendrites can be suppressed.

Optionally, the carbon material comprises at least two of mesocarbon microbead, graphite, natural graphite, expanded graphite, artificial graphite, vitreous carbon, a carbon-carbon composite material, carbon fiber, hard carbon, porous carbon, highly oriented graphite, three-dimensional graphite, carbon black, carbon nanotube and graphene. In one embodiment, the carbon material can be a mixture of carbon black, graphene, and carbon nanotubes at a mass ratio of 1:1:1. It can be understood that, compared to the use of a single carbon material, the combined use of two or more carbon materials can expand the dimension of the conductivity type of the carbon material and improve the conductivity of the carbon material.

As an alternative technical solution of the present application, the mass ratio of the carbon material in the carbon material coating 12 is 90% to 99%; and specifically, it can be 90%, 90.5%, 91%, 91.3%, 92.8%, 94%, 94.8%, 95%, 95.6%, 96.2%, 96.5%, 97%, 98% or 99%, etc., or other values within the aforementioned range, which is not limited here. If the mass ratio of the carbon material in the coating is too high, i.e., if the mass ratio of the polymer binder is too low, the adhesion of the carbon material coating will be reduced, and problems such as peeling off and cracking of the coating in the processing process can easily occur. If the mass ratio of the carbon material in the carbon material coating is too low, it will reduce the conductivity of the carbon material coating, and thus cannot effectively improve the overpotential of sodium intercalation, easily form sodium dendrites, and reduce the cycling performance of the battery. Optionally, the mass ratio of the carbon material in the carbon material coating 12 is 94% to 97%.

As an alternative technical solution of the present application, the carbon material comprises an oxygen-containing group selected from at least one of a carboxyl group, a hydroxyl group and an ether group. After the sodium-ion battery is charged for the first time, the sodium metal is deposited on the surface of the carbon material coating on the side away from the negative electrode current collector. Since the carbon material comprises an oxygen-containing group which has good sodium affinity and is easy to bind to a sodium ion preferentially to form a uniform sodium metal nucleus, the overpotential of a subsequent sodium intercalation reaction is reduced, the uniformity of sodium metal deposition is improved, the formation and growth of sodium dendrites are inhibited, and the cycling performance of the sodium metal negative electrode is improved.

As an alternative technical solution of the present application, the mass content of the oxygen atoms in the carbon material is ≥ 0.1%, and the mass content of the oxygen atoms may specifically be 0.1%, 0.2%, 0.3%, 0.4%, 0.5%, 0.6%, 0.7%, 0.8%, 0.9% or 1%, etc., or other values within the aforementioned range, which is not limited here. Too low oxygen atom content in the carbon material is not conducive to the formation of the uniform sodium metal nucleus from the sodium ion, and is not conducive to improving the uniformity of sodium metal deposition.

Further, as shown in Fig. 1, the negative electrode sheet 1 further comprises a sodium metal layer 13 formed on at least part of the surface of the carbon material coating 12 away from the negative electrode current collector 11. Due to the low potential barrier of the sodium metal, the overpotential of sodium intercalation of the carbon material coating 12 can be reduced, thereby reducing the overpotential of the entire negative electrode sheet. The sodium metal layer 13 may completely cover the surface of the carbon material coating 12, or may partially cover the surface of the carbon material coating 12.

As an alternative technical solution of the present application, the mass content of the sodium metal layer 13 in the negative electrode sheet 1 is 0.1% to 1%, and specifically it can be 0.1%, 0.2%, 0.3%, 0.4%, 0.5%, 0.6%, 0.7%, 0.8% or 1%, etc., or other values within the aforementioned range, which is not limited here. If the mass content of the sodium metal layer in the negative electrode sheet is too high, too much sodium metal easily reacts with air and water to cause processing difficulties, resulting in the growth of dendrites; and if the mass content of the sodium metal layer in the negative electrode sheet is too low, it will cause too little sodium metal bound to the carbon material, and it is impossible to effectively use the sodium metal to reduce the overpotential of sodium intercalation, thereby reducing the overpotential of the whole negative electrode sheet.

As an alternative technical solution of the present application, the polymer binder in the carbon material coating 12 comprises at least one of sodium cellulose, sodium carboxymethyl cellulose, hydroxypropyl cellulose, sodium hydroxymethylcellulose, potassium hydroxymethylcellulose, diacetyl cellulose, polyacrylic acid, sodium alginate, styrene butadiene rubber, butadiene acrylate rubber, polypyrrole, polyaniline, epoxy resin and guar gum. The polymer binder has relatively higher viscosity and mechanical strength, which can ensure the integrity of the contact interface between the carbon material coating and the negative electrode current collector, inhibit the growth of the dendrites, and improve the cycling performance.

As an alternative technical solution of the present application, a method for preparing the aforementioned negative electrode sheet comprises the following steps:
placing a carbon material into a mixed solution of concentrated sulfuric acid and concentrated nitric acid with a volume ratio of 3:1 and stirring for 1 h to 6 h, and controlling the reaction time to control the oxygen content;
washing the reacted carbon material with deionized water, filtering, then placing into an oven, and oven drying under a condition of 80°C;
adding the oven-dried carbon material and a polymer binder into a solvent under stirring to form a uniform slurry, coating the slurry on a negative electrode current collector (specifically, which may be copper/aluminum foil), and oven drying to obtain an electrode sheet; wherein, the solvent can be selected from at least one of water, acetone, N-methyl pyrrolidone, dimethylformamide, and ethanol; and
placing the electrode sheet into a physical vapor deposition device, and forming a uniform sodium metal layer on a surface of the electrode sheet by ion sputtering to obtain the negative electrode sheet.

### Second aspect

The present application provides an electrochemical apparatus comprising a positive electrode sheet, a negative electrode sheet and an electrolyte solution, wherein the negative electrode sheet is the negative electrode sheet as described in the first aspect described above. For example, the electrochemical apparatus according to the present application is a sodium-ion battery.

The positive electrode sheet comprises a positive electrode current collector and a positive electrode active material layer formed on at least part of a surface of the positive electrode current collector, wherein the positive electrode active material layer comprises a positive electrode active material which may comprise at least one of a sodium transition metal oxide, a polyanionic compound and a Prussian blue compound. However, the present application is not limited to these materials, and other conventional well-known materials useful as positive electrode active materials for the sodium-ion battery can also be used.

As an alternative technical solution of the present application, the transition metal in the sodium transition metal oxide may be at least one of Mn, Fe, Ni, Co, Cr, Cu, Ti, Zn, V, Zr and Ce. The sodium transition metal oxide is, for example, NaₓMO₂, wherein M is one or more of Ti, V, Mn, Co, Ni, Fe, Cr and Cu, and 0 < x ≤ 1.

As an alternative technical solution of the present application, the polyanionic compound may be a type of compounds having a sodium ion, a transition metal ion and a tetrahedral (YO₄)ⁿ⁻ anion unit. The transition metal may be at least one of Mn, Fe, Ni, Co, Cr, Cu, Ti, Zn, V, Zr and Ce; Y may be at least one of P, S and Si; and n represents the valence of (YO₄)ⁿ⁻

The polyanionic compound may also be a class of compounds having a sodium ion, a transition metal ion, a tetrahedral (YO₄)ⁿ⁻ anion unit, and a halogen anion. The transition metal may be at least one of Mn, Fe, Ni, Co, Cr, Cu, Ti, Zn, V, Zr and Ce; Y may be at least one of P, S and Si; n represents the valence of (YO₄)ⁿ⁻ ; and the halogen may be at least one of F, Cl and Br.

The polyanionic compound may also be a class of compounds having a sodium ion, a tetrahedral (YO₄)ⁿ⁻ anion unit, a polyhedral unit (ZO_{y})^{m+}, and an optical halogen anion. Y may be at least one of P, S and Si, and n represents the valence of (YO₄)ⁿ⁻; Z represents a transition metal which may be at least one of Mn, Fe, Ni, Co, Cr, Cu, Ti, Zn, V, Zr and Ce, m represents the valence of (ZO_{y})^{m+}; and the halogen may be at least one of F, Cl and Br.

The polyanionic compound is for example at least one of NaFePO₄, Na₃V₂(PO₄)₃, NaM'PO₄F (M' is one or more of V, Fe, Mn and Ni) and Na₃(VO_{y})₂(PO₄)₂F_{3-2y} (0 ≤ y ≤ 1).

The Prussian blue compound may be a class of compounds having a sodium ion, a transition metal ion and a cyanide ion (CN-). The transition metal may be at least one of Mn, Fe, Ni, Co, Cr, Cu, Ti, Zn, V, Zr and Ce. The Prussian blue compound is for example NaₐMe_{b}Me'_{c} (CN)₆, wherein Me and Me' are each independently at least one of Ni, Cu, Fe, Mn, Co, and Zn, 0<a≤2, 0 < b <1, and 0 < c <1.

As an alternative technical solution of the present application, the positive electrode active material layer may further comprise a conductive agent to improve the conductivity performance of the positive electrode. There is no particular limitation on the type of the conductive agent in the present application, and it can be selected according to actual requirements. As an example, the conductive agent can be one or more of superconducting carbon, acetylene black, carbon black, Ketjen black, carbon dots, carbon nanotubes, graphene and carbon nanofibers.

As an alternative technical solution of the present application, the positive electrode active material layer may further comprise a binder, so as to firmly bond the positive electrode active material and the optional conductive agent on the positive electrode current collector. There is no particular limitation on the type of the binder in the present application, and it can be selected according to actual requirements. As an example, the binder may be at least one of polyvinylidene fluoride (PVDF), polytetrafluoroethylene (PTFE), polyacrylic acid (PAA), polyvinyl alcohol (PVA), ethylene-vinyl acetate copolymer (EVA), styrene butadiene rubber (SBR), carboxymethyl cellulose (CMC), sodium alginate (SA), polymethacrylic acid (PMA) and carboxymethyl chitosan (CMCS).

As an alternative technical solution of the present application, a conductive carbon sheet, metal foil, carbon-coated metal foil, a porous metal plate or a composite current collector can be employed for the positive electrode current collector, wherein the conductive carbon material of the conductive carbon sheet may be one or more of superconducting carbon, acetylene black, carbon black, Ketjen black, carbon dots, carbon nanotubes, graphite, graphene and carbon nanofibers, and the metal materials of the metal foil, the carbon-coated metal foil and the porous metal plate are each independently selected from at least one of copper, aluminum, nickel and stainless steel. The composite current collector can be a composite current collector formed by compounding the metal foil and a polymer base film.

The positive electrode current collector is, for example, one or more of copper foil, aluminum foil, nickel foil, stainless steel foil, a stainless steel mesh and carbon-coated aluminum foil, and preferably aluminum foil is employed.

The aforementioned positive electrode sheet can be prepared according to a conventional method in the art. Generally, the positive electrode active material, the optional conductive agent and the binder are dispersed in a solvent (e.g., N-methyl pyrrolidone, referred to as NMP for short) to form a uniform positive electrode slurry. The positive electrode slurry is coated on the positive electrode current collector, and subjected to oven drying and cold pressing to obtain the positive electrode sheet.

The separator in the sodium-ion battery of the present application can be various materials suitable for the separator of an electrochemical energy storage apparatus in the art. For example, it can include, but is not limited to at least one of polyethylene, polypropylene, polyvinylidene fluoride, aramid, polyethylene terephthalate, polytetrafluoroethylene, polyacrylonitrile, polyimide, polyamide, polyester and natural fiber.

The aforementioned electrolyte solution can comprise an organic solvent and a sodium salt of electrolyte. As an example, the organic solvent may be one or more of ethylene carbonate, propylene carbonate, diethyl carbonate, dimethyl carbonate, ethyl methyl carbonate, propylene carbonate, methyl acetate, ethyl propionate, fluoroethylene carbonate, diethyl ether, diethylene glycol dimethyl ether, triethylene glycol dimethyl ether, tetraethylene glycol dimethyl ether, and methyl tert-butyl ether; and the sodium salt of electrolyte may be one or more of sodium hexafluorophosphate, sodium bis(fluorosulfonyl)imide, sodium bistrifluoromethanesulfonimide, sodium trifluoromethanesulfonate, sodium tetrafluoroborate, sodium difluorophosphate, sodium perchlorate, and sodium chloride.

The aforementioned positive electrode sheet, the separator and the negative electrode sheet are stacked sequentially, so that the separator is positioned between the positive electrode sheet and the negative electrode sheet to play a separation role, so as to obtain a battery cell or a battery cell after winding; the battery cell is placed in a packaging shell (which can be a soft package, a square aluminum shell, a square steel shell, a cylindrical aluminum shell and a cylindrical steel shell), and the packaging shell is injected with the electrolyte solution and sealed to obtain a sodium-ion battery.

### Third aspect

The present application further provides an electronic device comprising the electrochemical apparatus according to the second aspect described above. The electrochemical apparatus can be used as a power source for the electronic device to provide electrical power for the electronic device. Examples of the electronic device include, but are not limited to a vehicle, a mobile phone, a portable device, a laptop, a ship, a spacecraft, an electric toy, an electric tool, and the like.

### Examples

The following examples describe the disclosure of the present application in more detail and are provided for illustrative purposes only, as various modifications and changes within the scope of the disclosure of the present application will be apparent to those skilled in the art. Unless otherwise stated, all parts, percentages, and ratios reported in the following examples are on a weight basis, and all reagents used in the examples are all commercially available or can be obtained by synthesis according to conventional methods, and can be directly used without further treatment, and the instruments used in the examples are all commercially available.
1) Preparation of positive electrode sheet
   10wt% of a polyvinylidene fluoride binder was fully dissolved in N-methyl pyrrolidone, and 10wt% of a carbon black conductive agent and 80wt% of a Na₄Fe₃(PO₄)₂(P₂O₇) positive electrode active material were added to prepare an evenly dispersed positive electrode slurry. The positive electrode slurry was evenly coated on a surface of aluminum foil, and then the aluminum foil was transferred into a vacuum drying oven to be fully dried. The obtained electrode sheet was rolled and then punched out to obtain a target wafer.
2) Preparation of negative electrode sheet
   The carbon material and sodium alginate were added into water and stirred to form a uniform slurry, the slurry was coated on a negative electrode current collector, oven-dried and cut to obtain a negative electrode sheet without negative electrode structure; and
   the negative electrode sheet was placed into a physical vapor deposition device, and a sodium metal layer was formed on a surface of the negative electrode sheet by ion sputtering to obtain a negative electrode sheet.
3) Employment of porous polymer film of polyethylene (PE) as the separator.
4) Preparation of electrolyte solution
   Ethylene glycol dimethyl ether (DME) was taken as the organic solvent, and then fully dried sodium salt NaPF6 was dissolved in the mixed organic solvent to prepare an electrolyte solution with a concentration of 1 mol/L.
5) Preparation of button battery
   The aforementioned positive electrode sheet, separator and negative electrode sheet were stacked sequentially, so that the separator was located between the positive electrode sheet and the negative electrode sheet to play a separation role, and the aforementioned electrolyte solution was added to assemble into a button battery.

Examples 1 to 24 and Comparative Examples 1 to 10 of negative electrode sheets were prepared according to the aforementioned preparation method, and their specific parameters were as shown in Table 1.

**Table 1**

| Sample | Thickn ess of carbon materia 1 coating (µm) | Mass ratio of carbon materia lin carbon materia l coating (%) | Types of carbon materials | Mass conte nt of oxyge n atom in carbo n materi al (%) | Negative electrode current collector | Mass content of sodium metal layer in negative electrode sheet (%) |
|---|---|---|---|---|---|---|
| Example 1 | 0.3 | 95 | Carbon black, graphene, carbon nanotube | 0.3 | aluminu m foil | 0.4 |
| Example 2 | 1 | 95 | Carbon black, graphene, carbon nanotube | 0.3 | aluminu m foil | 0.4 |
| Example 3 | 3 | 95 | Carbon black, graphene, carbon nanotube | 0.3 | aluminu m foil | 0.4 |
| Example 4 | 5 | 95 | Carbon black, graphene, carbon nanotube | 0.3 | aluminu m foil | 0.4 |
| Example 5 | 7 | 95 | Carbon black, graphene, carbon nanotube | 0.3 | aluminu m foil | 0.4 |
| Example 6 | 10 | 95 | Carbon black, graphene, carbon nanotube | 0.3 | aluminu m foil | 0.4 |
| Example 7 | 3 | 90 | Carbon black, graphene, carbon nanotube | 0.3 | aluminu m foil | 0.4 |
| Example 8 | 3 | 94 | Carbon black, graphene, carbon nanotube | 0.3 | aluminu m foil | 0.4 |
| Example 9 | 3 | 96 | Carbon black, graphene, carbon nanotube | 0.3 | aluminu m foil | 0.4 |
| Example 10 | 3 | 97 | Carbon black, graphene, carbon nanotube | 0.3 | aluminu m foil | 0.4 |
| Example 11 | 3 | 99 | Carbon black, graphene, carbon nanotube | 0.3 | aluminu m foil | 0.4 |
| Example 12 | 3 | 95 | Carbon black | 0.3 | aluminu m foil | 0.4 |
| Example 13 | 3 | 95 | Graphene | 0.3 | aluminu m foil | 0.4 |
| Example 14 | 3 | 95 | Carbon nanotube | 0.3 | aluminu m foil | 0.4 |
| Example 15 | 3 | 95 | Carbon black, graphene, carbon nanotube | 0.1 | aluminu m foil | 0.4 |
| Example 16 | 3 | 95 | Carbon black, graphene, carbon nanotube | 0.2 | aluminu m foil | 0.4 |
| Example 17 | 3 | 95 | Carbon black, graphene, carbon nanotube | 0.4 | aluminu m foil | 0.4 |
| Example 18 | 3 | 95 | Carbon black, graphene, carbon nanotube | 0.3 | Porous aluminu m foil | 0.4 |
| Example 19 | 3 | 95 | Carbon black, graphene, carbon nanotube | 0.3 | Porous aluminu m foil | 0.1 |
| Example 20 | 3 | 95 | Carbon black, graphene, carbon nanotube | 0.3 | Porous aluminu m foil | 0.3 |
| Example 21 | 3 | 95 | Carbon black, graphene, carbon nanotube | 0.3 | Porous aluminu m foil | 0.5 |
| Example 22 | 3 | 95 | Carbon black, graphene, carbon nanotube | 0.3 | Porous aluminu m foil | 0.7 |
| Example 23 | 3 | 95 | Carbon black, graphene, carbon nanotube | 0.3 | Porous aluminu m foil | 0.8 |
| Example 24 | 3 | 95 | Carbon black, graphene, carbon nanotube | 0.3 | Porous aluminu m foil | 1 |
| Comparati ve Example 1 | 11 | 95 | Carbon black, graphene, carbon nanotube | 0.3 | aluminu m foil | 0.4 |
| Comparati ve Example 2 | 0.1 | 95 | Carbon black, graphene, carbon nanotube | 0.3 | aluminu m foil | 0.4 |
| Comparati ve Example 3 | 3 | 88 | Carbon black, graphene, carbon nanotube | 0.3 | aluminu m foil | 0.4 |
| Comparati ve Example 4 | 3 | 99.5 | Carbon black, graphene, carbon nanotube | 0.3 | aluminu m foil | 0.4 |
| Comparati ve Example 5 | 3 | 95 | Carbon black, graphene, carbon nanotube | / | aluminu m foil | 0.4 |
| Comparati ve Example 6 | 3 | 95 | Carbon black, graphene, carbon nanotube | 0.08 | aluminu m foil | 0.4 |
| Comparati ve Example 7 | 3 | 95 | Carbon black, graphene, carbon nanotube | 0.3 | Porous aluminu m foil | / |
| Comparati ve Example 8 | 3 | 95 | Carbon black, graphene, carbon nanotube | 0.3 | Porous aluminu m foil | 0.05 |
| Comparati ve Example 9 | 3 | 95 | Carbon black, graphene, carbon nanotube | 0.3 | Porous aluminu m foil | 1.2 |
| Comparati ve Example 10 | / | / | / | / | aluminu m foil | / |

| | | | | | | |
|---|---|---|---|---|---|---|
| wherein, "/" indicates that the content of the material was 0. | | | | | | |

### Performance Test:

### [Test for performance parameters of negative electrode sheet]

### 1) Thickness of carbon material coating:

The electrode sheet quenched and cut by liquid nitrogen was subjected to cross-sectional imaging by SEM, and the thickness of the carbon material coating was measured by a secondary electron image.

### 2) Performance test of battery

At 25°C, the battery prepared in the example was charged to 50 µA at a rate of 0.1C, and the most negative potential obtained during the process was recorded as overpotential;
a full-charge and full-discharge cycle test was performed by charging the batteries prepared in the examples and comparative examples to 4 V at a rate of 0.1C and discharging the same to 1 V at a rate of 0.1C at 25°C, until the capacity of the sodium-ion battery was less than 80% of the initial capacity, and the specific capacity of the first cycle of discharge and the number of cycles were recorded. The specific data of them were as shown in Table 2.

**Table 2**

| Sample | Overpotential (mV) | Specific capacity of the first cycle of discharge (mAh/g) | Number of cycles |
|---|---|---|---|
| Example 1 | 20 | 115 | 436 |
| Example 2 | 18 | 118 | 610 |
| Example 3 | 14 | 122 | 656 |
| Example 4 | 16 | 120 | 622 |
| Example 5 | 16 | 118 | 618 |
| Example 6 | 16 | 114 | 611 |
| Example 7 | 17 | 115 | 598 |
| Example 8 | 16 | 120 | 632 |
| Example 9 | 14 | 121 | 655 |
| Example 10 | 17 | 117 | 615 |
| Example 11 | 20 | 111 | 459 |
| Example 12 | 16 | 120 | 619 |
| Example 13 | 18 | 117 | 581 |
| Example 14 | 18 | 117 | 574 |
| Example 15 | 17 | 119 | 589 |
| Example 16 | 16 | 120 | 616 |
| Example 17 | 16 | 120 | 631 |
| Example 18 | 12 | 123 | 701 |
| Example 19 | 18 | 119 | 631 |
| Example 20 | 14 | 120 | 663 |
| Example 21 | 13 | 119 | 654 |
| Example 22 | 12 | 118 | 605 |
| Example 23 | 11 | 119 | 587 |
| Example 24 | 11 | 119 | 554 |
| Comparative Example 1 | 16 | 105 | 581 |
| Comparative Example 2 | 23 | 111 | 415 |
| Comparative Example 3 | 18 | 113 | 573 |
| Comparative Example 4 | 21 | 109 | 411 |
| Comparative Example 5 | 20 | 117 | 555 |
| Comparative Example 6 | 19 | 118 | 567 |
| Comparative Example 7 | 22 | 115 | 581 |
| Comparative Example 8 | 20 | 118 | 600 |
| Comparative Example 9 | 11 | 120 | 521 |
| Comparative Example 10 | 30 | 100 | 328 |

According to the test results of Examples 1 to 6 and Comparative Examples 1 and 2, when the thickness of the carbon material coating on the surface of the negative electrode current collector was in the range of 0.3 µm to 10 µm, the specific capacity of the first cycle of discharge of the battery was relatively higher, and the battery had relatively higher energy density, so that the carbon material coating could improve the overpotential of sodium intercalation, inhibit the formation of sodium dendrites, and improve the cycling performance of the battery. It could be seen from the test result of Comparative Example 1 that, when the thickness of the carbon material coating was too thick, the energy density of the battery decreased, and thus the effect of improving the energy density of the battery through the sodium-ion battery without the negative electrode structure could not be achieved. It could be seen from the test result of Comparative Example 2 that, when the thickness of the carbon material coating was too thin, it would cause too few nucleation sites for the sodium metal, and thus it was difficult to improve the overpotential of sodium intercalation, resulting in easy growth of sodium dendrites toward the separator and decreasing the cycling performance of the battery. Preferably, the thickness of the carbon material coating was 1 µm to 7 µm.

It could be seen from the test results of Examples 7 to 11 and Comparative Examples 3 and 4 that, when the mass ratio of the carbon material in the carbon material coating was 90%-99%, the overpotential of sodium intercalation could be effectively improved, the growth of sodium dendrites could be inhibited, and the cycling performance of the battery could meet the usage requirements. It could be seen from the test result of Comparative Example 3 that, when the mass ratio of the carbon material in the carbon material coating was too low, the conductivity of the carbon material coating decreased, so that the specific capacity of the first cycle of discharge of the battery was reduced, the improvement of the overpotential of sodium intercalation was not obvious, and the cycling performance of the battery was decreased. It could be seen from the test result of Comparative Example 4 that, when the mass ratio of the carbon material in the carbon material coating was too large, the adhesion of the carbon material coating decreased, problems of peeling off, cracking and the like of the coating easily occurred in the processing process, and the cycling performance of the battery was decreased. Preferably, the mass ratio of the carbon material in the carbon material coating was 94%-97%.

It could be seen from the test results of Example 3 and Examples 12 to 14 that, compared with the use of a single carbon material, the mixed use of two or more carbon materials could expand the dimension of the conductivity type of the carbon material, improve the conductivity of the carbon material, and improve the specific capacity of the first cycle of discharge of the battery.

It could be seen from the test results of Example 3, Examples 15 to 17, and Comparative Examples 5 and 6 that, when the carbon material comprised an oxygen-containing group which had good sodium affinity and was easy to bind to a sodium ion preferentially to form a uniform sodium metal nucleus, the overpotential of a subsequent sodium intercalation reaction was reduced, the uniformity of sodium metal deposition was improved, the formation and growth of sodium dendrites were inhibited, and the cycling performance of the sodium metal negative electrode was improved. The oxygen content of the carbon material in Comparative Example 6 was too low, which had small improvement effect on the nucleation of the sodium metal, and its overpotential of sodium intercalation reaction was lower than that of Comparative Example 5 (in which the carbon material was free of oxygen), but the decrease in the overpotential was not as obvious as that in Example 3 and Examples 15 to 17.

It could be seen from the test results of Examples 3 and 18 that, the negative electrode current collector of Example 18 had a porous structure, which could increase the specific surface area of the negative electrode current collector, increase the alleviation of the volume change of the negative electrode sheet, inhibit the formation of dendrites, and improve the cycling performance of the battery.

It could be seen from the test results of Examples 19 to 24 and Comparative Examples 7 and 9 that, when the mass content of the sodium metal layer in the negative electrode sheet was in the range of 0.1% to 1%, the overpotential of sodium intercalation could be effectively reduced. In Comparative Example 7, no sodium metal layer was formed on the surface of the carbon material coating, and the overpotential of the carbon material coating was relatively increased, which was not conducive to improving the electrochemical performance of the battery. In Comparative Example 8, the mass content of the sodium metal layer in the negative electrode sheet was too low, it would cause too little sodium metal bound with the carbon material, and it was impossible to effectively use the sodium metal to reduce the overpotential of sodium intercalation, thereby reducing the overpotential of the whole negative electrode sheet. In Comparative Example 9, the mass content of the sodium metal layer in the negative electrode sheet was too high, and too much sodium metal easily reacted with air and water to cause processing difficulties, resulting in the growth of dendrites and a decrease in the cycling performance of the battery.

It could be seen from the test results of Examples 1 to 24 and Comparative Example 10 that, in Comparative Example 10, only the negative electrode current collector was used as the negative electrode, no carbon material coating was formed to reduce the overpotential of sodium intercalation, the battery had the highest overpotential and the worst cycling performance. Therefore it could be seen that by forming the carbon material coating on the surface of the negative electrode current collector, the overpotential of the battery could be effectively reduced and the cycling performance of the battery could be improved.

Although the present application is disclosed above with preferred embodiments, it is not used for limiting the claims. Any person skilled in the art can make several possible changes and modifications without departing from the concept of the present application. Therefore, the claimed scope of the present application shall be subject to the scope defined by the claims of the present application.

## Claims

1. A negative electrode sheet of a sodium-ion battery, comprising a negative electrode current collector and a carbon material coating formed on at least part of a surface of the negative electrode current collector, wherein the thickness of the carbon material coating is less than or equal to 10 µm, and the carbon material coating comprises a carbon material and a polymer binder.

2. The negative electrode sheet according to claim 1, which satisfies at least one of the following conditions:
(1) the carbon material comprises at least one of mesocarbon microbead, graphite, natural graphite, expanded graphite, artificial graphite, vitreous carbon, a carbon-carbon composite material, carbon fiber, hard carbon, porous carbon, highly oriented graphite, three-dimensional graphite, carbon black, carbon nanotube and graphene;
(2) the mass ratio of the carbon material in the carbon material coating is 90%-99%;
(3) the mass ratio of the carbon material in the carbon material coating is 94%-97%;
(4) the thickness of the carbon material coating is 0.3 µm to 10 µm; and
(5) the thickness of the carbon material coating is 1 µm to 7 µm.

3. The negative electrode sheet according to claim 1, which satisfies at least one of the following conditions:
(6) the negative electrode current collector comprises at least one of metal foil, a metal foam current collector, a metal mesh current collector, a carbon felt current collector, a carbon cloth current collector, a carbon paper current collector and a composite current collector; and
(7) the negative electrode current collector has a porous structure, and the negative electrode current collector comprises at least one of porous aluminum foil, porous copper foil and porous stainless steel foil.

4. The negative electrode sheet according to any one of claims 1 to 3, wherein the negative electrode sheet further comprises a sodium metal layer formed on at least part of the surface of the carbon material coating away from the negative electrode current collector.

5. The negative electrode sheet according to claim 4, wherein the mass content of the sodium metal layer in the negative electrode sheet is 0.1% to 1%.

6. The negative electrode sheet according to claim 1, which satisfies at least one of the following conditions:
(8) the carbon material comprises an oxygen-containing group selected from at least one of a carboxyl group, a hydroxyl group and an ether group; and
(9) the carbon material comprises an oxygen-containing group, and the mass content of oxygen atoms in the carbon material is ≥ 0.1%.

7. The negative electrode sheet according to claim 1, wherein the polymer binder comprises at least one of sodium cellulose, sodium carboxymethyl cellulose, hydroxypropyl cellulose, sodium hydroxymethyl cellulose, potassium hydroxymethyl cellulose, diacetyl cellulose, polyacrylic acid, sodium alginate, styrene butadiene rubber, butadiene acrylate rubber, polypyrrole, polyaniline, epoxy resin and guar gum.

8. An electrochemical apparatus comprising a positive electrode sheet, a negative electrode sheet and an electrolyte solution, wherein the negative electrode sheet is the negative electrode sheet according to any one of claims 1 to 7.

9. The electrochemical apparatus according to claim 8, wherein the positive electrode sheet comprises a positive electrode current collector and a positive electrode active material layer formed on at least part of a surface of the positive electrode current collector, wherein the positive electrode active material layer comprises a positive electrode active material comprising at least one of a sodium transition metal oxide, a polyanionic compound and a Prussian blue compound.

10. An electronic device comprising the electrochemical apparatus according to any one of claims 8 to 9.
